(19) Europäisches Patentamt
European Patent Office
Office européen des brevets

(11) EP 4 470 754 A1

(12) EUROPÄISCHE PATENTANMELDUNG

(43) Veröffentlichungstag:
04.12.2024 Patentblatt 2024/49

(21) Anmeldenummer: 23176960.5

(22) Anmeldetag: 02.06.2023

(51) Internationale Patentklassifikation (IPC):
B29C 64/124 (2017.01)    B29C 64/393 (2017.01)
B33Y 10/00 (2015.01)    B33Y 30/00 (2015.01)
B33Y 50/02 (2015.01)

(52) Gemeinsame Patentklassifikation (CPC):
B29C 64/124; B29C 64/393; B33Y 10/00;
B33Y 30/00; B33Y 50/02

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(71) Anmelder: Ivoclar Vivadent AG
9494 Schaan (LI)

(72) Erfinder:
• John, Hendrik
9470 Buchs (CH)
• Niedrig, Christian
9478 Azmoos (CH)
• Bonderer, Lorenz Josef
7320 Sargans (DE)

(74) Vertreter: Baldus, Oliver
Splanemann
Rumfordstrasse 7
80469 München (DE)

(54) DYNAMISCHE BELICHTUNGSSTRATEGIE

(57) Ein Druckverfahren zum Herstellen eines Bauteils, mit den Schritten eines Berechnens (S101) eines Energieeintrags für einen räumlichen Bereich des Bauteils auf Basis der optischen Parameter eines lichthärtbaren Materials; und eines Aushärtens (S102) des Bereichs des Bauteils mittels Licht, das den berechneten Energieeintrag in das Material erzeugt.

Fig. 1

**Beschreibung**

Die vorliegende Erfindung betrifft ein Druckverfahren und eine Druckvorrichtung zum Herstellen eines Bauteils.

Im Stereolithografie-3D-Druck wird ein flüssiges Material mittels Lichteinwirkung polymerisiert. Üblicherweise befindet sich das flüssige Material in einer Wanne mit transparentem Boden, in die eine Bauplattform von oben eintaucht und bis zur gewünschten Schichtdicke an den Wannenboden heranfährt. Das im Zwischenspalt befindliche flüssige Material wird dann an den gewünschten Stellen durch den transparenten Wannenboden mittels einer Belichtungsvorrichtung beleuchtet, beispielsweise mittels punktueller Beleuchtung durch eine Laserstrahlrasterung oder vollflächiger Beleuchtung mittels eines Mikrospiegelarrays (DMD - Digital Mirror Device).

Bei ausreichender Belichtungsenergie über der Polymerisationsschwelle der Druckflüssigkeit wird diese an den beleuchteten Stellen polymerisiert, also ausgehärtet. Anschließend bewegt sich die Bauplattform mit der anhaftenden ausgehärteten Schicht nach oben und stellt für die nächste Schicht wieder den nötigen Zwischenspalt zwischen bereits gehärteter Schicht und dem Wannenboden her. Danach erfolgt die nächste Belichtung. So kann schichtweise ein dreidimensionales Bauteil aufgebaut werden.

Die schichtspezifisch zu polymerisierende Geometrie wird vollständig beleuchtet. Dabei kommt es an den Rändern der belichteten Form zu einer Lichtstreuung durch das flüssige Material und ebenfalls zu einer Lichtstreuung durch das polymerisierte Material, das sukzessive während der Belichtungszeit ausgehärtet worden ist.

Am Bauteil oder zwischen den Schichten des Bauteils bilden sich dadurch unerwünschte ausgehärtete Materialflocken, die zum einen die Passform des Bauteils beeinträchtigen und zum anderen eine Ablösung (Delamination) einzelner Schichten des Bauteils am Wannenboden verursachen. Die Ablösung tritt auch dann auf, wenn die Belichtungsenergie nicht ausreicht, die gewünschte und per Bauplattjob eingestellte Schichtdicke des flüssigen Materials vollständig auszuhärten oder wenn die vorhergehende Schicht zu stark auspolymerisiert ist.

Eine Änderung der chemischen Zusammensetzung des Materials führt zu negativen Änderungen bei anderen Eigenschaften, z.B. der mechanischen Stabilität, und löst das grundsätzliche Problem nicht. Daneben zeigt sich auch ein Einfluss der verwendeten Intensität des Lichts. Bei gleichbleibender eingestrahlter Gesamtenergie findet vermehrt Flockenbildung bei höheren Intensitäten statt. Höhere Intensitäten verringern die nötigen Belichtungszeiten pro Schicht und sind damit maßgeblich für die Gesamtdauer des Druckprozesses verantwortlich, die so kurz wie möglich sein soll.

Es ist die technische Aufgabe der Erfindung, ein Druckverfahren so zu verbessern, dass das Entstehen von Materialflocken und eine Ablösung von Schichten verhindert wird.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Druckverfahren zum Herstellen eines Bauteils gelöst, mit den Schritten eines Berechnens eines Energieeintrags für einen räumlichen Bereich des Bauteils auf Basis der optischen Parameter eines lichthärtbaren Materials; und eines Aushärtens des räumlichen Bereichs des Bauteils mittels Licht, das den berechneten Energieeintrag im Material erzeugt. Das Berechnen kann in Abhängigkeit des sich ändernden Polymerisationsgrades über die Belichtungszeit berechnet werden. Das Licht kann sich dynamisch über die Belichtungszeit verändern. Der Bereich des Bauteils kann durch einen Teilbereich gebildet sein, wie beispielsweise einen Voxel. Dadurch kann jeder Teilbereich des Bauteils selektiv belichtet werden. Die optischen Parameter können einen Streukoeffizienten, einen Absorptionskoeffizienten und/oder einen Transmissionskoeffizienten umfassen. Der Energieeintrag in den Bereich kann durch direkte Beleuchtung von einer Lichtquelle und/oder indirekte Beleuchtung durch Streuung aus benachbarten Bereichen verursacht werden. Durch das Verfahren wird der technische Vorteil erreicht, dass das Bauteil mit einer höheren Präzision hergestellt werden kann.

In einer technisch vorteilhaften Ausführungsform des Druckverfahrens erfolgt die Berechnung auf Basis einer Geometrie des Bauteils. Dadurch wird beispielsweise der technische Vorteil erreicht, dass auch schmale Stellen oder spitze Winkel ohne Flockenbildung gedruckt werden können.

In einer weiteren technisch vorteilhaften Ausführungsform des Druckverfahrens wird ein zeitlicher Verlauf des Energieeintrags berechnet. Dadurch wird beispielsweise der technische Vorteil erreicht, dass die Herstellung des Bauteils noch weiter verbessert wird.

In einer weiteren technisch vorteilhaften Ausführungsform des Druckverfahrens wird der zeitliche Verlauf auf Basis einer zeitlichen oder räumlichen Polymerisation des Bereichs berechnet. Dadurch wird beispielsweise der technische Vorteil erreicht, dass der Fortschritt einer Polymerisation bei der Belichtung berücksichtigt wird und in der Schicht eine möglichst gleichmäßige Polymerisation in der Querschnittsfläche des Objektes erfolgt.

In einer weiteren technisch vorteilhaften Ausführungsform des Druckverfahrens wird eine Intensität einer Belichtung auf Basis des zeitlichen Verlaufs des Energieeintrags verändert. Die Intensität kann dadurch in Abhängigkeit der Zeit verändert werden. Beispielsweise ändert sich die Intensität der Belichtung im Verlauf der Zeit. Dadurch wird beispielsweise der technische Vorteil erreicht, dass ein Überstrahlen und somit die Flockenbildung verringert wird und das Bauteil mit einer hohen Genauigkeit hergestellt werden kann.

In einer weiteren technisch vorteilhaften Ausführungsform des Druckverfahrens wird eine Fläche der Belichtung auf Basis des zeitlichen Verlaufs des Energieeintrags verändert. Die belichtete Fläche kann dadurch in Abhängigkeit der Zeit verändert werden. Dadurch wird beispielsweise der technische Vorteil erreicht, dass der Energieeintrag auf einfache Weise gesteuert werden kann.

In einer weiteren technisch vorteilhaften Ausführungsform des Druckverfahrens wird eine Wiederholfrequenz einer periodischen Belichtung auf Basis des zeitlichen Verlaufs zeitlich verändert. Eine periodische Belichtung verwendet einzelne Lichtpulse oder Lichtblitze, um das lichthärtende Material auszuhärten. Dadurch wird beispielsweise der technische Vorteil erreicht, dass der Energieeintrag auf einfache Weise gesteuert werden kann.

In einer weiteren technisch vorteilhaften Ausführungsform des Druckverfahrens werden die optischen Parameter des lichthärtbaren Materials gemessen. Die optischen Parameter können im nichtausgehärteten und/oder im ausgehärteten Zustand gemessen werden. Dadurch wird beispielsweise der technische Vorteil erreicht, dass die Belichtungsparameter an unterschiedliche Materialien anhand ihrer optischen Eigenschaften angepasst werden können.

In einer weiteren technisch vorteilhaften Ausführungsform des Druckverfahrens wird das Licht mittels eines Lasers oder eines Mikrospiegelarrays erzeugt. Dadurch wird beispielsweise der technische Vorteil erreicht, dass leicht steuerbare Lichtquellen verwendet werden.

In einer weiteren technisch vorteilhaften Ausführungsform des Druckverfahrens ist der Bereich ein Voxel. Dadurch wird beispielsweise der technische Vorteil erreicht, dass jedes Voxel mit einer vorberechneten Energiemenge belichtet wird.

Gemäß einem zweiten Aspekt wird die technische Aufgabe durch eine Druckvorrichtung zum Herstellen eines Bauteils gelöst, mit einer Berechnungsvorrichtung zum Berechnen eines Energieeintrags für einen räumlichen Bereich des Bauteils auf Basis der optischen Parameter eines lichthärtbaren Materials; und einer Belichtungsvorrichtung zum Aushärten des Bereichs des Bauteils mittels Licht, das den berechneten Energieeintrag in das Material erzeugt. Durch die Druckvorrichtung werden die gleichen technischen Vorteile wie durch das Druckverfahren nach dem ersten Aspekt erreicht.

In einer weiteren technisch vorteilhaften Ausführungsform der Druckvorrichtung ist die Berechnungsvorrichtung ausgebildet, einen zeitlichen Verlauf des Energieeintrags zu berechnen. Dadurch wird beispielsweise ebenfalls der technische Vorteil erreicht, dass die Herstellung des Bauteils noch weiter verbessert wird.

In einer weiteren technisch vorteilhaften Ausführungsform der Druckvorrichtung ist die Berechnungsvorrichtung ausgebildet, die Berechnung auf Basis einer Geometrie des Bauteils durchzuführen. Dadurch wird beispielsweise ebenfalls der technische Vorteil erreicht, dass auch komplexe Geometrien fehlerfrei aufgebaut werden können.

In einer weiteren technisch vorteilhaften Ausführungsform der Druckvorrichtung umfasst die Druckvorrichtung eine Messvorrichtung zum Messen der optischen Parameter. Die Messvorrichtung umfasst beispielsweise ein Spektrometer oder einen Lichtsensor zum Messen einer Transmission oder Absorption bei einer vorgegebenen Wellenlänge. Im Allgemeinen können optische Parameter des lichthärtbaren Materials auch außerhalb der Druckvorrichtung bestimmt werden. Dadurch wird beispielsweise der technische Vorteil erreicht, dass schmale Stellen oder spitze Winkel ohne Flockenbildung gedruckt werden können.

In einer weiteren technisch vorteilhaften Ausführungsform der Druckvorrichtung umfasst die Belichtungsvorrichtung einen Laser oder ein Mikrospiegelarray. Dadurch wird beispielsweise der technische Vorteil erreicht, dass das Licht leicht steuerbar in das Material eingebracht werden kann.

Ausführungsbeispiele der Erfindung sind in den Zeichnungen dargestellt und werden im Folgenden näher beschrieben.

Es zeigen:

Fig. 1 ein Diagramm für eine Durchhärtungstiefe in Abhängigkeit der Belichtungsenergie;

Fig. 2 eine schematische Ansicht einer Druckvorrichtung;

Fig. 3 eine schematische Ansicht einer Belichtungsstrategie;

Fig. 4 eine schematische Ansicht einer weiteren Belichtungsstrategie; und

Fig. 5 ein Blockdiagramm eines Druckverfahrens.

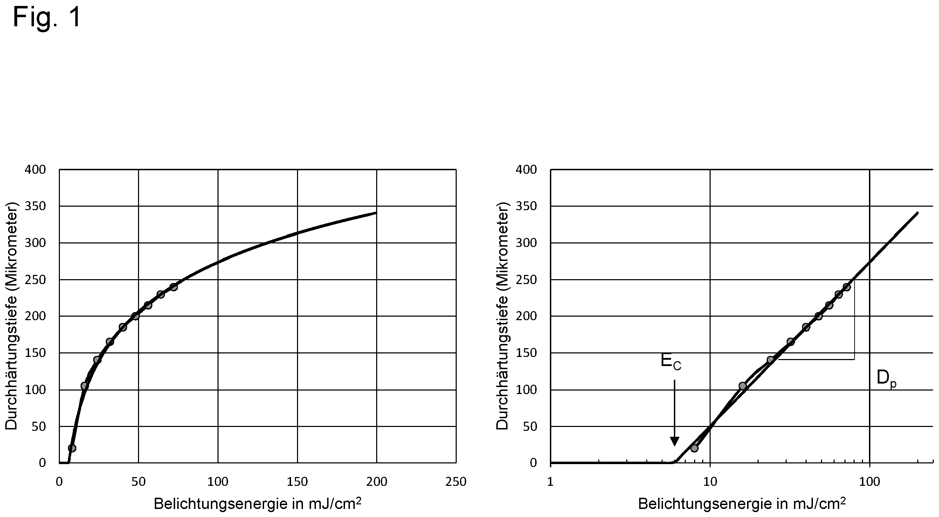

Fig. 1 zeigt ein Diagramm für eine Durchhärtungstiefe in Abhängigkeit der Belichtungsenergie. Die Durchhärtungstiefe in $\mu$m ist gegenüber der Belichtungsenergie E in mJ/cm$^2$ aufgetragen. Die Durchhärtungstiefe $C_D$ ist eine empirische Größe, die auf der eingestrahlten Energiemenge E beruht. Materialspezifisch kann ein Zusammenhang zwischen der Durchhärtungstiefe und der eingestrahlten Belichtungsenergie E gemessen werden. Der Zusammenhang lautet:

$$C_D = D_p \ln\left(\frac{E}{E_C}\right)$$

In der logarithmischen Auftragung ist gezeigt, dass es eine materialspezifische minimale Polymerisationsenergie Ec gibt, unterhalb derer keine Polymerisation stattfindet. Die (Licht)-Eindringtiefe $D_p$ ist durch die Steigung der Geraden festgelegt. Die Polymerisation findet erst statt, wenn lokal durch das Licht die Photoinitiatoren allen verfügbaren Sauerstoff umgesetzt haben.

Solange dies nicht geschieht, kann sich die Sauerstoffkonzentration lokal durch Diffusion wieder erhöhen und angleichen. Die bereits lokal kumulierte Bestrahlungsenergie verteilt sich auf ein größeres Flüssigkeitsvolumen auf Kosten einer Verringerung des Gesamtsauerstoffgehalts. Dies führt danach zu einem Absinken der Polymerisationsenergie Ec der Gesamtflüssigkeit und verschiebt den Arbeitspunkt des Lichthärteprozesses. Auf diese Art wird die Zeit verkürzt, die sonst zum Ausgleich durch Diffusion zur Verfügung steht und die verbleibende kumulierte Energie überschreitet schneller die minimale Polymerisationsenergie Ec.

Bei der Belichtung wird stets eine Energiemenge in die Flüssigkeit undefiniert außerhalb des zu polymerisierenden Bereichs eingebracht. Da das Material in der Lage ist, diese Energie zu kumulieren, reicht zu einem bestimmten Zeitpunkt die eingestreute Energie aus, das Material auch außerhalb des belichteten Bereichs ungewünscht zu polymerisieren.

Letztlich zeigt sich auch ein Einfluss der verwendeten Intensität des Lichts. Bei gleichbleibender eingestrahlter Gesamtenergie findet vermehrt Flockenbildung bei höheren Intensitäten statt. Bei höheren Intensitäten verringern sich die Belichtungszeiten pro Schicht. Diese sind für die Gesamtdauer des Druckprozesses verantwortlich, die so kurz wie möglich sein soll.

Dieser Effekt ist außerdem abhängig von den Materialeigenschaften des flüssigen Ausgangsmaterials, beispielsweise von optischen Eigenschaften wie einer Opazität und Pigmentierung, d.h. einem Absorptions- und Streukoeffizient. Für jedes Material kann ein Prozessfenster gefunden werden, in dem die Flockenbildung unterdrückt und Ablösung von einzelnen Schichten vermieden wird. Daher ist es technisch vorteilhaft, wenn die aufgrund von Lichtstreuung außerhalb der auszuhärtenden Bereiche eingebrachte Belichtungsenergie im Vergleich zu einer vollflächigen Belichtung verringert oder ausgeschlossen wird.

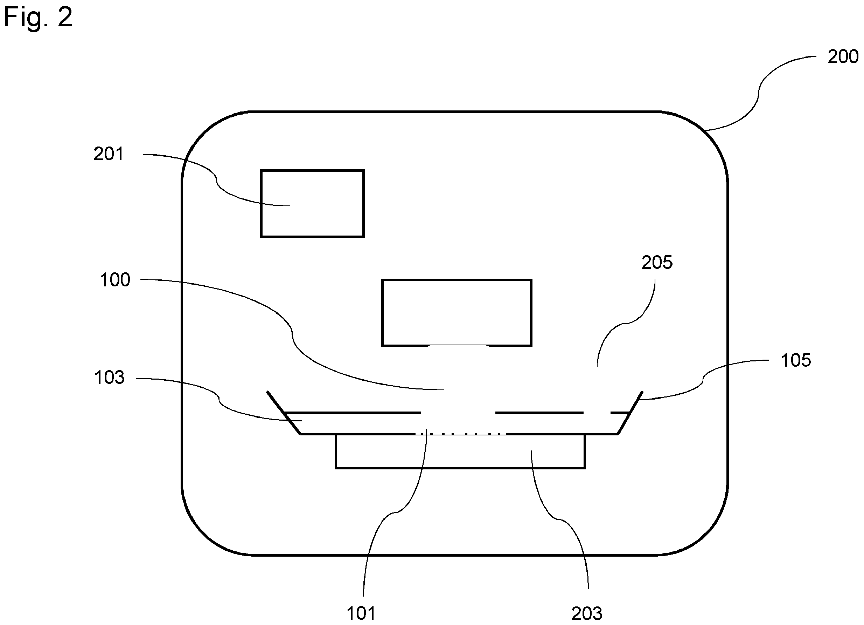

Fig. 2 zeigt eine schematische Ansicht einer Druckvorrichtung 200 zum Herstellen eines Bauteils auf Basis eines lichthärtbaren Materials 103, die beispielsweise durch ein Stereolithografie-Gerät gebildet ist. Die Druckvorrichtung 200 dient zum schichtweisen Aufbauen eines dreidimensionalen Bauteils 100 aus einem lichthärtbaren Material 103, wie beispielsweise ein Härtbares Dentalmaterial.

Um eine unerwünschte Flockenbildung des lichthärtbaren Materials 103 zu verhindern, umfasst die Druckvorrichtung 200 eine Berechnungsvorrichtung 201 zum Berechnen eines Energieeintrags für einen räumlichen Bereich 101 des Bauteils 100 auf Basis der optischen Parameter des lichthärtbaren Materials 103.

Die optischen Eigenschaften, wie eine Brechzahl, eine Absorption, eine Streuung, oder eine optische Anisotropie des flüssigen und des polymerisierten Materials 103 können für die verwendete Wellenlänge durch eine Messvorrichtung 205 gemessen werden.

Zudem kann die Kinetik des Polymerisierungsvorganges gemessen werden. Zu diesem Zweck umfasst die Messvorrichtung 205 geeignete Sensoren, mit denen die optischen Parameter der Materials 103 gemessen werden können. Die Messvorrichtung 205 umfasst beispielsweise ein Spektrometer oder Sensoren, mit denen die Absorption oder Transmission bei einer vorgegebenen Wellenlänge berechnet werden können. Die optischen Parameter werden anschließend an die Berechnungsvorrichtung 201 übermittelt.

Die optischen Parameter des lichthärtbaren Materials 103 können auch außerhalb der Druckvorrichtung 200 bestimmt werden. Diese können anschließend in die Druckvorrichtung 200 eingegeben, so dass diese die optischen Parameter weiterverarbeiten kann.

Die Berechnungsvorrichtung 201 berechnet anschließend für jeden Bereich im Volumen des Bauteils 100 bei gewählter Schichtdicke die zu jedem Zeitpunkt tatsächlich eingestrahlte Lichtenergie auf Basis der optischen Parameter über die Strahlungstransporttheorie, beispielsweise aus einer veränderlichen Transmission, Absorption und/oder Streuung unter Berücksichtigung der zunehmenden Polymerisationsschichtdicke.

Zudem wird nicht nur nicht nur für jeden Bereich im Volumen des Bauteils 100 die eingestrahlte Lichtenergie auf Basis der optischen Parameter über die berechnet, sondern auch für Bereiche außerhalb des Volumens, die nicht aushärten sollen und unterhalb einer Grenze für die kumulierte Polymerisationsenergie liegen sollen.

Somit kann dynamisch für jede Schicht und jeden Bereich 101 des Bauteils 100 der zeitliche Verlauf der einzustrahlenden Intensität berechnet werden, um ein Polymerisieren innerhalb des vorgesehenen Bereichs 101 zu gewährleisten, während außerhalb dieses Bereichs 101 der Energieeintrag durch Streuung minimiert wird.

Die Berechnungsvorrichtung 201 umfasst beispielsweise einen digitalen Speicher und einen Mikroprozessor, der aus den optischen Parametern des Materials 103 und der Strahlungstransportgleichung den Energieeintrag für den jeweiligen zu belichtenden Bereich und einen umliegenden Bereich berechnen kann. Der digitale Speicher umfasst hierzu ein geeignetes Computerprogramm und speichert die erhaltenen Daten.

Zudem umfasst die Druckvorrichtung 200 eine Belichtungsvorrichtung 203 zum Aushärten des Bereichs 101 des Bauteils 100 unterhalb der Wanne 105 mittels Licht, das den berechneten Energieeintrag in das Material 103 erzeugt. Die Belichtungsvorrichtung 203 ist in der Lage, jeden Bereich 101 einzeln zu belichten. Zu diesem Zweck kann die Belichtungsvorrichtung 203 durch die Berechnungsvorrichtung 201 gesteuert werden.

Durch die Belichtungsvorrichtung 203 kann der Energieeintrag voxelgenau über Graustufenwerte des Mikrospiegelgerätes geregelt werden. Wenn stattdessen ein Laser über die Fläche gerastert wird, kann dies über unterschiedliche Verweilzeiten des Laserstrahls je Bereich 101 gelöst werden. Es ist auch möglich, synchron zu einer zeitlichen pixelgenauen Änderung des zu belichtenden Bereichs 101 die Intensität der Lichtquelle dynamisch zu ändern.

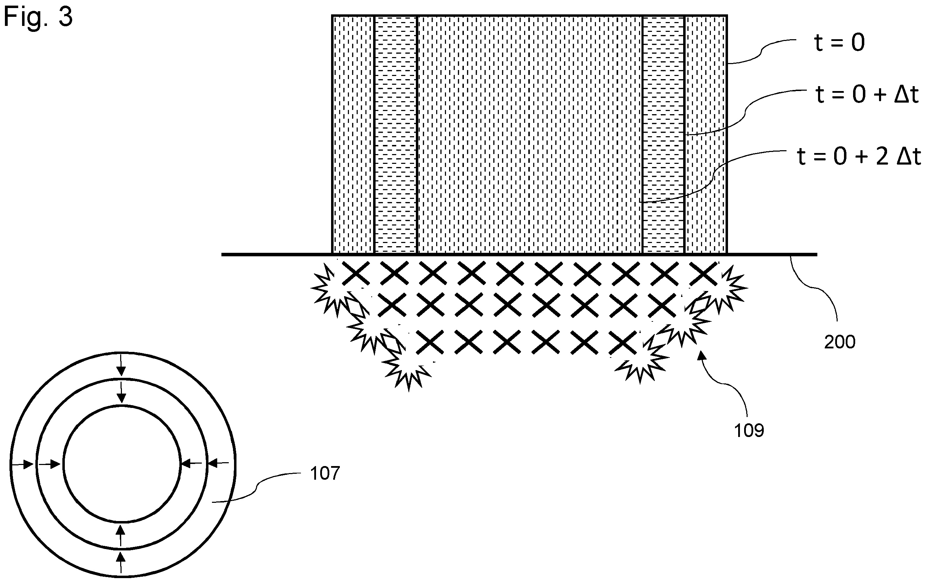

Fig. 3 zeigt eine schematische Ansicht einer Belichtungsstrategie. Wenn beispielsweise die Streuung 109 im polymerisierten Material 103 höher als im flüssigen Material 103 ist, läuft die Polymerisationsfront beginnend beim transparenten Wannenboden 207 durch die belichtete Schicht. Die Streuung 109 nimmt an den Rändern des Bauteils 100 in Richtung der nicht zu belichtenden Flüssigkeit mit zunehmender Polymerisierung ebenfalls zu.

In diesem Fall wird die belichtete Fläche 107 während der Belichtung stetig verkleinert, so dass die vermehrte Streuung 109 noch ausreicht, das gesamte Volumen des Bauteils 100 auszuhärten, nicht jedoch Bereiche der Flüssigkeit, die außerhalb des Bauteils 100 liegen.

Wenn die Streuung 109 im polymerisierten Material 103 demgegenüber geringer als im flüssigen Material 103 ist, nimmt mit zunehmender Polymerisationsschichtdicke die Streuung in die Umgebung stetig ab. In diesem Fall wird zunächst mit verkleinerter Fläche 107 belichtet. Im Verlauf der Belichtung wird die Fläche 107 bis zur tatsächlichen Geometriegröße aufgeweitet.

Auf diese Weise kann eine verändernde Belichtung mit beliebig vielen unterschiedlichen Masken realisiert werden, die in einer Verweildauer, einer Form und einem Transmissionsgrad variieren. Durch die physikalisch korrekte Berechnung des Energieeintrags kann die Intensität in jedem Bereich 101 so angepasst werden, dass eine Flockenbildung minimiert oder gar vollständig vermieden wird. Eine ausreichende Polymerisierung zur Verhinderung der Ablösung von Schichten im Bauteil wird trotzdem sichergestellt und der Belichtungsvorgang kann schneller oder zeitoptimiert stattfinden.

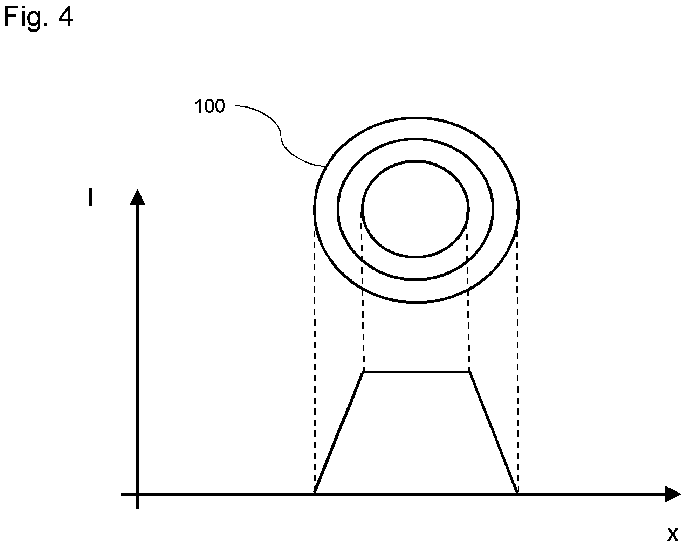

Fig. 4 zeigt eine schematische Ansicht einer weiteren Belichtungsstrategie. Bei dieser Belichtungsstrategie wird das Belichtungsmuster nicht zeitlich verändert, sondern die Intensität I einer Beleuchtung wird zum Rand des Bauteils 100 hin verringert. Auf diese Weise kann ebenfalls ein Energieeintrag durch Streuung in Bereiche der Flüssigkeit verhindert werden, die außerhalb des Bauteils 100 liegen und nicht aushärten sollen.

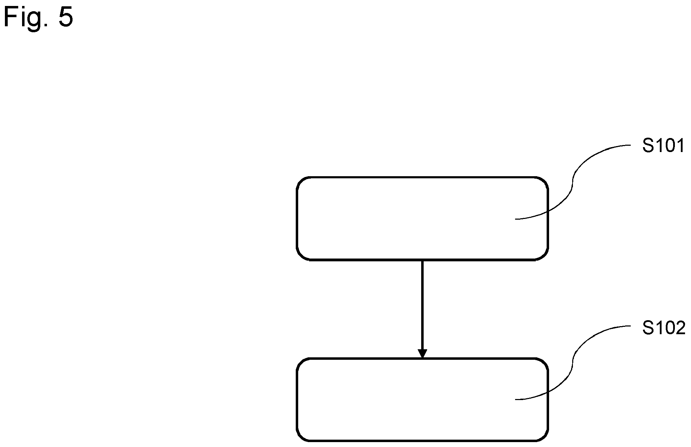

Fig. 5 zeigt ein Blockdiagramm des Druckverfahrens zum Herstellen des Bauteils 100. Das Verfahren umfasst den Schritt S101 eines Berechnens eines Energieeintrags für einen auszuhärtenden räumlichen Bereich 101 des Bauteils 100 auf Basis der optischen Parameter des lichthärtbaren Materials 103. Danach erfolgt der Schritt S102 eines Aushärtens des räumlichen Bereichs 101 des Bauteils 100 mittels Licht, das den berechneten Energieeintrag im Material 103 erzeugt. Die Schritte können für jeden räumlichen Bereich 101 des Bauteils 100 durchgeführt werden.

Auf diese Weise kann für eine Vielzahl von räumlichen Bereichen des Bauteils 100 eine geeignete Belichtung berechnet werden. Die dynamische Berechnung durch die Berechnungsvorrichtung 201 stellt sicher, dass selbst bei ungewöhnlichen Geometrien des Bauteils 100, wie beispielsweise bei schmalen Stellen, spitzen oder überstumpfen Winkeln, scharfen Ausbuchtungen oder Einkerbungen, der ungewünschte Energieeintrag in die umgebende Flüssigkeit minimiert wird.

Hierzu kann der beleuchtete Bereich dynamisch verändert werden oder eine dynamische Anpassung der punktuellen Belichtungsintensität oder Belichtung oder eine Kombination aus allen Möglichkeiten erfolgen. Beispielsweise kann an einzelnen Punkten die Belichtung vorzeitig beendet werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

BEZUGSZEICHENLISTE

| | |
|---|---|
| 100 | Bauteil |
| 101 | Bereich |
| 103 | lichthärtbares Material |
| 105 | Wanne |
| 107 | belichtete Fläche |
| 109 | Streuung |
| | |
| 200 | Druckvorrichtung |
| 201 | Berechnungsvorrichtung |
| 203 | Belichtungsvorrichtung |
| 205 | Messvorrichtung |
| 207 | Wannenboden |

**Patentansprüche**

1. Druckverfahren zum Herstellen eines Bauteils (100), mit den Schritten:

    - Berechnen (S101) eines Energieeintrags für einen räumlichen Bereich (101) des Bauteils

(100) auf Basis der optischen Parameter eines lichthärtbaren Materials (103); und

- Aushärten (S102) des räumlichen Bereichs (101) des Bauteils (100) mittels Licht, das den berechneten Energieeintrag im Material (103) erzeugt.

2. Druckverfahren nach Anspruch 1, wobei die Berechnung auf Basis einer Geometrie des Bauteils (100) erfolgt.

3. Druckverfahren nach einem der vorangehenden Ansprüche, wobei ein zeitlicher Verlauf des Energieeintrags berechnet wird.

4. Druckverfahren nach Anspruch 3, wobei der zeitliche Verlauf auf Basis einer zeitlichen oder räumlichen Polymerisation des Bereichs berechnet wird.

5. Druckverfahren nach Anspruch 3 oder 4, wobei eine Intensität einer Belichtung auf Basis des zeitlichen Verlaufs des Energieeintrags verändert wird.

6. Druckverfahren nach einem der Ansprüche 3 bis 5, wobei eine Fläche der Belichtung auf Basis des zeitlichen Verlaufs des Energieeintrags verändert wird.

7. Druckverfahren nach einem der Ansprüche 3 bis 6, wobei eine Wiederholfrequenz einer periodischen Belichtung auf Basis des zeitlichen Verlaufs verändert wird.

8. Druckverfahren nach einem der Ansprüche 3 bis 7, wobei die optischen Parameter des lichthärtbaren Materials (103) gemessen werden.

9. Druckverfahren nach einem der vorangehenden Ansprüche, wobei das Licht mittels eines Lasers oder eines Mikrospiegelarrays erzeugt wird.

10. Druckverfahren nach einem der vorangehenden Ansprüche, wobei der Bereich ein Voxel ist.

11. Druckvorrichtung (200) zum Herstellen eines Bauteils (100), mit:

  - einer Berechnungsvorrichtung (201) zum Berechnen eines Energieeintrags für einen räumlichen Bereich (101) des Bauteils (100) auf Basis der optischen Parameter eines lichthärtbaren Materials (103); und
  - einer Belichtungsvorrichtung (203) zum Aushärten des Bereichs (101) des Bauteils (100) mittels Licht, das den berechneten Energieeintrag in das Material (103) erzeugt.

12. Druckvorrichtung nach Anspruch 11, wobei die Berechnungsvorrichtung (201) ausgebildet ist, einen zeitlichen Verlauf des Energieeintrags zu berechnen.

13. Druckvorrichtung nach Anspruch 11 oder 12, wobei die Berechnungsvorrichtung (201) ausgebildet ist, die Berechnung auf Basis einer Geometrie des Bauteils (100) durchzuführen.

14. Druckvorrichtung (200) nach einem der Ansprüche 11 bis 13, wobei die Druckvorrichtung (200) eine Messvorrichtung (205) zum Messen der optischen Parameter umfasst.

15. Druckvorrichtung (200) nach einem der Ansprüche 11 bis 14, wobei die Belichtungsvorrichtung (202) einen Laser oder ein Mikrospiegelarray umfasst.

Fig. 1

Fig. 2

Fig. 3

t = 0

t = 0 + Δt

t = 0 + 2 Δt

200

109

107

EP 4 470 754 A1

EP 4 470 754 A1

Fig. 5

S101

S102

Europäisches
Patentamt

European
Patent Office

Office européen
des brevets

**EUROPÄISCHER RECHERCHENBERICHT**

Nummer der Anmeldung

EP 23 17 6960

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/088873 A1 (VOIT WALTER [US] ET AL) 24. März 2022 (2022-03-24) * Absätze [0042], [0049], [0058], [0081], [0081], [0083], [0091] * ----- | 1-15 | INV. B29C64/124 B29C64/393 B33Y10/00 B33Y30/00 B33Y50/02 |
| X | US 2013/123988 A1 (JARIWALA AMIT S [US] ET AL) 16. Mai 2013 (2013-05-16) * Absatz [0075] * ----- | 1,11 | |
| X | US 2022/001601 A1 (FANG NICHOLAS [US] ET AL) 6. Januar 2022 (2022-01-06) * Absatz [0102] * ----- | 1,11 | |

RECHERCHIERTE
SACHGEBIETE (IPC)

B29C
B33Y

Der vorliegende Recherchenbericht wurde für alle Patentansprüche erstellt

| Recherchenort | Abschlußdatum der Recherche | Prüfer |
|---|---|---|
| Den Haag | 8. November 2023 | Gasner, Benoit |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 17 6960

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-2023

| Im Recherchenbericht angeführtes Patentdokument | Datum der Veröffentlichung | Mitglied(er) der Patentfamilie | Datum der Veröffentlichung |
|---|---|---|---|
| US 2022088873 A1 | 24-03-2022 | AU 2020211607 A1 | 12-08-2021 |
| | | CA 3127485 A1 | 30-07-2020 |
| | | CN 113508023 A | 15-10-2021 |
| | | EP 3914437 A1 | 01-12-2021 |
| | | JP 2022518805 A | 16-03-2022 |
| | | KR 20210143170 A | 26-11-2021 |
| | | US 2022088873 A1 | 24-03-2022 |
| | | WO 2020154703 A1 | 30-07-2020 |
| US 2013123988 A1 | 16-05-2013 | US 2013123988 A1 | 16-05-2013 |
| | | WO 2012009630 A1 | 19-01-2012 |
| US 2022001601 A1 | 06-01-2022 | US 2022001601 A1 | 06-01-2022 |
| | | WO 2020123810 A1 | 18-06-2020 |

EPO FORM P0461

Für nähere Einzelheiten zu diesem Anhang : siehe Amtsblatt des Europäischen Patentamts, Nr.12/82